# EUROPEAN PATENT SPECIFICATION

(11) **EP 3 088 496 B1**
(45) Date of publication and mention of the grant of the patent: **27.02.2019**
(21) Application number: 14873221.7
(22) Date of filing: 29.08.2014
(51) Int. Cl.: C10L 5/12, C10L 9/10, B01J 19/18, B01J 19/20

(54) **COAL BRIQUETTE MANUFACTURING APPARATUS**
VORRICHTUNG ZUR HERSTELLUNG VON KOHLEBRIKETTS
APPAREIL DE FABRICATION DE BRIQUETTES DE CHARBON

(30) Priority: 24.12.2013 KR 20130163156
(43) Date of publication of application: 02.11.2016
(73) Proprietor: POSCO, Gyeongsangbuk-do 790-300 (KR)
(72) Inventor: KIM, Do-Seung, Pohang-si Gyeongsangbuk-do 790-300 (KR); JUNG, Jae-Hoon, Pohang-si Gyeongsangbuk-do 790-300 (KR); KIM, Dong-Jin, Pohang-si Gyeongsangbuk-do 790-300 (KR)
(74) Representative: Zech, Stefan Markus
(86) International application number: PCT/KR2014/008054
(87) International publication number: WO 2015/099263

(56) References cited:
- EP-A1- 3 023 480
- JP-A- 2007 023 170
- KR-A- 20050 068 245
- KR-A- 20070 076 212
- KR-A- 20120 035 753
- KR-B1- 100 784 147
- US-A- 3 791 802
- US-A- 4 037 303

## Description

### BACKGROUND OF THE INVENTION

### (a) Field of the Invention

The present invention relates to an apparatus for manufacturing coal briquettes. In detail, the present invention relates to an apparatus for manufacturing coal briquettes supplying a coal having a uniform density and particle size to manufacture the coal briquettes of high quality.

### (b) Description of the Related Art

A melting reduction iron-manufacturing process uses a reducing furnace for reducing iron ore and a melting gas furnace for melting reduced iron ore. When iron ore is melted in a melting gas furnace, coal briquettes as a heat source for melting iron ore are charged into the melting gas furnace. At this time, the reduced iron is melted in the melting gas furnace, converted into molten iron and slag, and then discharged to the outside. The coal briquettes charged into the melting gas furnace form a coal-packed bed. Oxygen is fed through a tuyere installed in the melting gas furnace, and then the coal-packed bed is combusted to produce combustion gas. While the combustion gas moves up through the coal-packed bed, the combustion gas is converted into high-temperature reducing gas. The high-temperature reducing gas is discharged to the outside of the melting gas furnace, and then is supplied to the reducing furnace as a reducing gas.

The coal briquettes obtain air permeability and liquid permeability such that a gas and a liquid smoothly pass through the melting gas furnace such that reaction efficiency and heat transmission efficiency are increased between materials. For this, the coal briquettes are manufactured with a briquette shape of a predetermined size by mixing pulverized coal having appropriate moisture and molasses as a binder, and compression-molding them in a molding device. Examples for briquetting apparatuses with which coal briquettes may be manufactured are described in US 3 791 802 A and US 4 037 303 A.

The molding device includes two compression molding rollers disposed at a lower side and a gravity feeder disposed at an upper side and supplying the coal to the molding rollers.

While the mixture inflowed to the gravity feeder is rotated in the gravity feeder, part of the coal of the pulverized state grows into a ball of a large diameter of more than 200 mm. Accordingly, the state that the coal of the pulverized state and the ball of the large diameter exist together in the gravity feeder is formed.

For quality improvement of the coal briquettes, coal having the uniform particle size and density must be supplied to the molding device.

However, conventionally, as described above, the density and the particle size of the coal supplied to the molding device are non-uniform such that the quality of the coal briquettes is decreased.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention provides an apparatus for manufacturing a coal briquette that increases the quality of the coal briquette by supplying a mixture having a uniform density and particle size to a molding device.

Also, an apparatus for manufacturing the coal briquette to improve the strength of the coal briquette is provided.

For this, an apparatus for manufacturing a coal briquette according to an exemplary embodiment of the present invention includes: a mixer mixing pulverized coal and a binder to form a mixture; a pre-molding device connected to the mixer and firstly compressing and molding the mixture; and a molding device connected to the pre-molding device and secondly compressing and molding the compressed matter molded through the pre-molding device to be manufactured as a coal briquette.

The manufacturing apparatus includes a crusher installed between the pre-molding device and the molding device and crushing the molding matter molded through the pre-molding device.

The manufacturing apparatus may further include at least one kneader connected to the output side of the mixer and kneading the mixture, and a feed screw transferring the mixture discharged from the kneader to the pre-molding device.

The pre-molding device may include a pair of pressure rollers installed in the housing and compressing the mixture, and an operation motor connected to a rotation axis of the pressure roller and rotating and driving the pressure roller.

The pair of pressure rollers may be disposed to be separated by an interval, and have a structure such that a protrusions and depressions part is formed at an external circumferential surface thereof.

The crusher may include a rotating rotor installed in a vertical passage connected to the housing output side of the pre-molding device to be rotated and installed with a crushing plate along an axis direction at an interval, and a driving motor rotating the rotating rotor.

At least two rotating rotors may be provided to be disposed in parallel in the vertical passage, and the crushing plate connected to each rotating rotor may be disposed to be staggered with each other between the neighboring rotating rotors.

As described above, according to the present exemplary embodiment, by manufacturing the coal into the coal briquette after pre-compressing the coal to be supplied to the molding roller, a strength deviation of the manufactured coal briquette is reduced and the strength may be increased.

Also, by supplying the coal that is pre-molded and having the uniform strength and particle size to the molding roller, the quality of the coal briquette may be increased.

### BRIEF DESCRIPTION OF THE DRAWINGS

FIG. 1 is schematic view showing an equipment configuration of an apparatus for manufacturing a coal briquette according to an exemplary embodiment of the present invention.
FIG. 2 is a view showing a partial configuration of an apparatus for manufacturing a coal briquette in detail according to an exemplary embodiment of the present invention.
FIG. 3 and FIG. 4 are views showing a configuration of a pre-molding device of an apparatus for manufacturing a coal briquette according to an exemplary embodiment of the present invention.
FIG. 5 and FIG. 6 are views showing a crusher structure of an apparatus for manufacturing a coal briquette according to an exemplary embodiment of the present invention.

### DETAILED DESCRIPTION OF THE EMBODIMENTS

Hereinafter, exemplary embodiments of the present invention will be described in detail with reference to the accompanying drawings so that those skilled in the art can easily achieve the present invention. As is understood by those skilled in the art, the following exemplary embodiments may be modified in various ways without departing from the concept and scope of the present invention. Like reference numerals are used for like components in the drawings.

The terminologies used hereafter are only for describing a specific exemplary embodiment and are not intended to limit the present invention. The singular terms used herein include plural terms unless phrases clearly express opposite meanings. The term 'including' used herein refers to concrete specific characteristics, regions, positive numbers, steps, operations, elements, and/or components, not limiting the existence or addition of other specific characteristics, regions, positive numbers, steps, operations, elements, and/or components.

All the terms, including technical terms and scientific terms used hereafter, have the same meanings as those that those skilled in the art generally understand. The terms defined in dictionaries should be construed as having meanings corresponding to the related prior art documents and those stated herein, and are not to be construed as being overly idealized or official, if not otherwise defined.

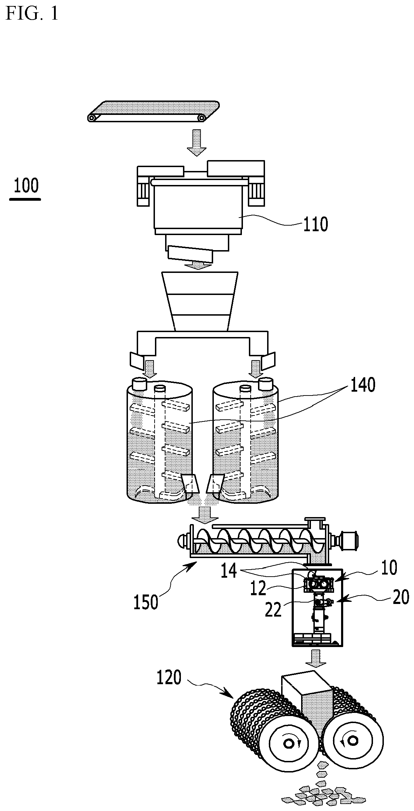

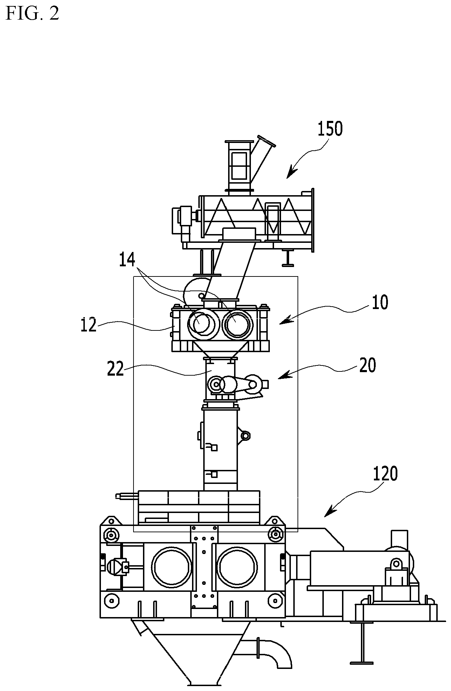

FIG. 1 and FIG. 2 show an equipment configuration of an apparatus for manufacturing a coal briquette according to an exemplary embodiment of the present invention.

The manufacturing apparatus 100 of the coal briquette of FIG. 1 is only for illustrating the present invention, and the present invention is not limited thereto. Accordingly, the structure of the apparatus for manufacturing the coal briquette 100 may be variously changed.

As shown in FIG. 1, the apparatus for manufacturing the coal briquette 100 includes a mixer 110 mixing pulverized coal and a binder such as molasses, and a molding device 120 compression-molding the mixture of the coal and the binder that are mixed in the mixer 110 to manufacture a briquette (hereinafter referred to as a coal briquette).

The apparatus for manufacturing the coal briquette 100 may further include other elements if necessary, for example, at least one kneader 140 connected to a rear of the mixer 110 and kneading the mixture, and a feed screw 150 transferring the mixture discharged from the kneader. Hereafter, the structure including the kneader 140 and the feed screw 150 will be described as an example.

The manufacturing apparatus 100 of the present exemplary embodiment further includes a pre-molding device 10 connected between the mixer and the molding device 120 and firstly compressing the mixture that passes through the mixer to be pre-molded.

The pre-molding device 10 includes two pressure rollers 14 installed in a housing 12 and compressing the mixture, and an operation motor 16 connected to a rotation axis of the pressure roller 14 and rotating and driving the pressure roller 14.

The housing 12 of the pre-molding device 10 is formed of a structure that is connected to an output side of the feed screw 150 and receives the mixture. Two pressure rollers 14 provided in the housing 12 form a pair and are disposed in parallel to be separated by a predetermined interval. The interval between the two pressure rollers 14 may be determined depending on a pre-compression force for the mixture.

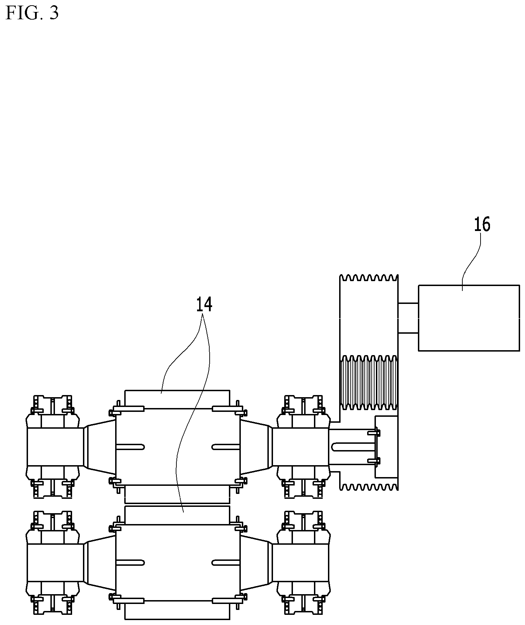

As shown in FIG. 3, the rotation axis of one side pressure roller 14 of two pressure rollers 14 is connected to the operation motor 16 to be rotated and driven. For example, the operation motor 16 is connected to the pressure roller 14 via a belt and pulley to transmit power. Accordingly, while the mixture inflowed inside the housing 12 passes between the two pressure rollers 14 depending on the rotation of the pressure roller 14, the mixture is compressed to be firstly molded.

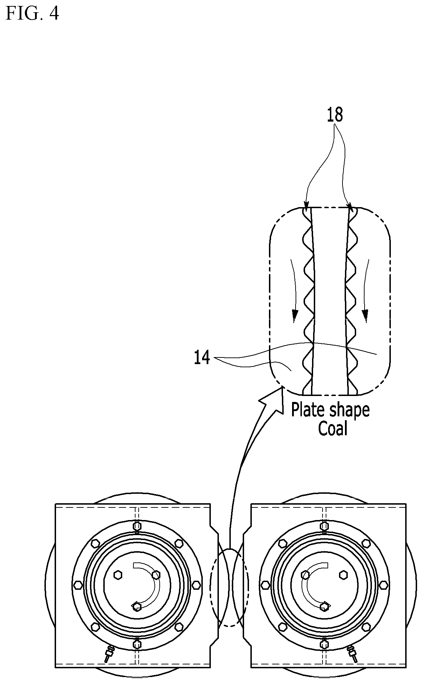

As shown in FIG. 4, the pressure roller 14 includes a protrusions and depressions part 18 formed on an external circumferential surface. The protrusions and depressions part 18 is formed of a structure where a convex part and a concave part extending in an axis direction of the pressure roller 14 are alternately and continuously formed along the external circumferential surface. The shape of the protrusions and depressions part 18 is not limited thereto and may be variously formed.

Accordingly, while the mixture passes through the pressure roller 14, the mixture is compressed in a plate shape having a thickness corresponding to the interval between the pressure rollers 14 and formed with a curved shape of the protrusions and depressions on the surface, thereby forming compressed matter having an entirely uniform density.

Accordingly, compared with a structure supplying the mixture through a conventional gravity feeder to the molding device 120, in the case of the present exemplary embodiment, while increasing the density of the mixture supplied to the molding device 120, the mixture having the density of the uniform state may be supplied.

Also, the manufacturing apparatus further includes a crusher 20 installed between the pre-molding device 10 and the molding device 120, and crushing the molding matter molded through the pre-molding device 10.

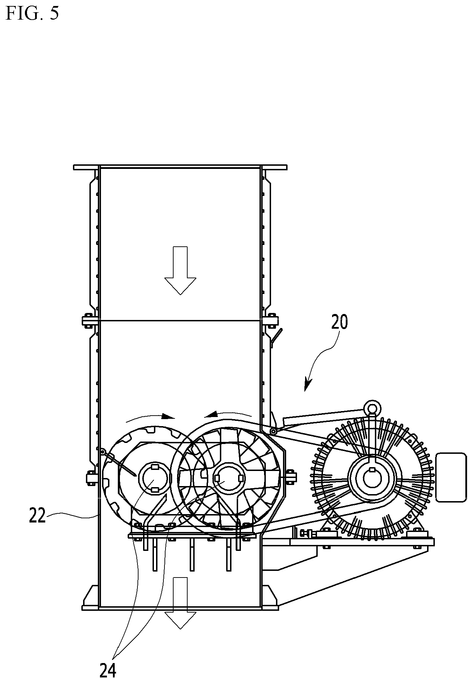

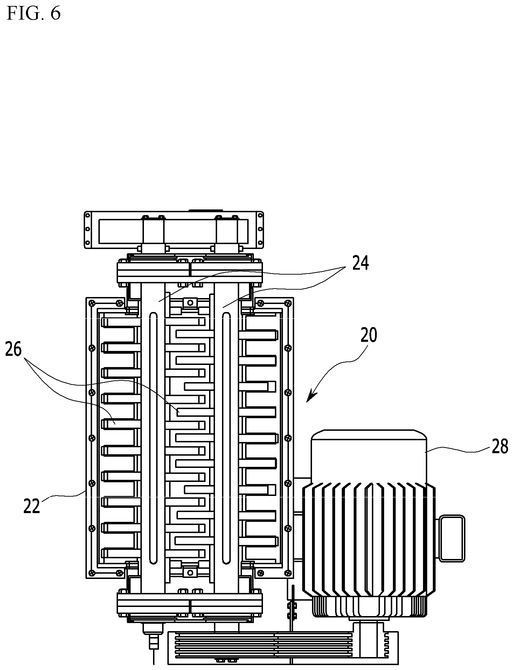

Next, the structure of the crusher 20 will be described with reference to FIG. 5 and FIG. 6.

A vertical passage 22 is formed at the output side of the lower end of the pre-molding device 10, and is connected to the molding device 120. The crusher 20 is installed inside the vertical passage 22, and crushes the compressed matter manufactured through the pre-molding device 10 to be supplied to the molding device 120 through the vertical passage 22.

As shown in FIG. 5 and FIG. 6, the crusher 20 includes a rotating rotor 24 installed inside the vertical passage 22 to be rotatable and installed with a crushing plate 26 by an interval along the axis direction and a driving motor 28 rotating the rotating rotor 24.

At least two rotating rotors 24 are provided to be disposed in parallel inside the vertical passage 22, and the crushing plates 26 installed to each rotating rotor 24 are disposed to be staggered with each other between the neighboring rotating rotors 24. The crusher 20 crushes the compressed matter of the plate shape to a predetermined size while rotating the crushing plate 26 depending on the rotation of the rotating rotor 24. The rotating rotor 24 is driven to be rotated depending on the operation of the driving motor 28. For example, the driving motor 28 is connected to the rotating rotor 24 of one side through the belt and the pulley, and two rotating rotors 24 are coupled to each other by a gear, thereby crushing the compressed matter while being rotated with respect to each other in opposite directions.

Here, the structure in which the crushing plate 26 is disposed to be staggered between the neighboring rotating rotors 24 means a structure in which the crushing plates 26 installed to the other neighboring rotating rotor 24 are positioned between the crushing plates 26 installed to the one side rotating rotor 24 such that the crushing plates 26 of the neighboring rotating rotors 24 are alternately disposed. Accordingly, while two rotating rotors 24 are rotated opposite to each other, the compressed matter of the plate shape is crushed into the predetermined size while the crushing plates 26 installed to each rotating rotor 24 pass between the crushing plates 26.

As described above, according to the present exemplary embodiment, the mixture of the pulverized coal and the binder is firstly compressed and molded through the pre-molding device 10 such that the density thereof is uniform, and the mixture is crushed to the uniform size through the crusher 20 to be supplied to the molding device 120. Accordingly, the mixture is committed to the molding device 120 in the state that the density and the particle size are uniform through the pre-molding device 10 and the crusher 20.

Accordingly, as the molding device 120 manufactures the coal briquette by compressing the compressed matter molded through the pre-compression, the coal briquette with improved strength and having uniform strength may be manufactured.

## Claims

1. An apparatus (100) for manufacturing a coal briquette, comprising:
a mixer (110) mixing pulverized coal and a binder to form a mixture;
a pre-molding device (10) connected to the mixer (110) and firstly compressing and molding the mixture;
a molding device (120) connected to the pre-molding device (10) and secondly compressing and molding the compressed matter molded through the pre-molding device (10) to be manufactured as a coal briquette;
**characterized by** further comprising
a crusher (20) installed between the pre-molding device (10) and the molding device (120) and crushing the molding matter molded through the pre-molding device (10).

2. The apparatus (100) of claim 1, wherein
the apparatus further includes at least one kneader (140) connected to the output side of the mixer (110) and kneading the mixture, and a feed screw (150) transferring the mixture discharged from the kneader (140) to the pre-molding device (10).

3. The apparatus (100) of claim 1, wherein
the pre-molding device (10) includes a pair of pressure rollers (14) installed in a housing (12) and compressing the mixture, and an operation motor (16) connected to a rotation axis of the pressure roller (14) and rotating and driving the pressure roller (14).

4. The apparatus (100) of claim 3, wherein
the pair of pressure rollers (14) are disposed to be separated by an interval and have a structure such that a protrusions and depressions part is formed at an external circumferential surface thereof.

5. The apparatus (100) of claim 1, wherein
the crusher (20) includes a rotating rotor (24) installed in a vertical passage (22) connected to the housing output side of the pre-molding device (10) to be rotated and installed with a crushing plate (26) along an axis direction t an interval, and a driving motor (28) rotating the rotating rotor (24).

6. The apparatus (100) of claim 5, wherein
at least two rotating rotors (24) are provided to be disposed in parallel in the vertical passage, and the crushing plate (26) connected to each rotating rotor (24) is disposed to be staggered with each other between the neighboring rotating rotors (24).

## Patentansprüche

1. Vorrichtung (100) zur Herstellung eines Kohlebriketts, umfassend:
einen Mischer (110), der pulverisierte Kohle und ein Bindemittel mischt, um ein Gemisch zu bilden;
eine Vorformungseinrichtung (10), die mit dem Mischer (110) verbunden ist und das Gemisch ein erstes Mal verdichtet und formt;
eine Formungseinrichtung (120), die mit der Vorformungseinrichtung (10) verbunden ist und das durch die Vorformungseinrichtung (10) geformte verdichtete Material ein zweites Mal verdichtet und formt, um als Kohlebrikett hergestellt zu werden;
**dadurch gekennzeichnet, dass** sie ferner Folgendes umfasst:
einen Brecher (20), der zwischen der Vorformungseinrichtung (10) und der Formungseinrichtung (120) eingebaut ist und das zu formende Material bricht, das durch die Vorformungseinrichtung (10) geformt wurde.

2. Vorrichtung (100) nach Anspruch 1, wobei
die Vorrichtung ferner Folgendes beinhaltet: wenigstens einen Kneter (140), der mit der Ausgangsseite des Mischers (110) verbunden ist und das Gemisch knetet, und eine Zuführschnecke (150), die das aus dem Kneter (140) ausgegebene Gemisch zu der Vorformungseinrichtung (10) befördert.

3. Vorrichtung (100) nach Anspruch 1, wobei
die Vorformungseinrichtung (10) Folgendes beinhaltet: ein Paar Druckwalzen (14), das in einem Gehäuse (12) eingebaut ist und das Gemisch verdichtet, und einen Betriebsmotor (16), der mit einer Drehachse der Druckwalze (14) verbunden ist und die Druckwalze (14) dreht und antreibt.

4. Vorrichtung (100) nach Anspruch 3, wobei
das Paar Druckwalzen (14) derart angeordnet ist, dass es durch einen Zwischenraum getrennt ist und eine derartige Struktur aufweist, dass ein Teil mit Vorsprüngen und Vertiefungen an einer äußeren Umfangsfläche davon gebildet ist.

5. Vorrichtung (100) nach Anspruch 1, wobei
der Brecher (20) Folgendes beinhaltet: einen sich drehenden Rotor (24), der in einem vertikalen Durchlass (22) eingebaut ist, der mit der Gehäuseausgangsseite der Vorformungseinrichtung (10) verbunden ist, um gedreht zu werden, und der entlang einer Achsrichtung in einem Abstand mit einer Brechplatte (26) eingebaut ist, und einen Antriebsmotor (28), der den sich drehenden Rotor (24) dreht.

6. Vorrichtung (100) nach Anspruch 5, wobei
wenigstens zwei sich drehende Rotoren (24) derart vorgesehen sind, dass sie parallel in dem vertikalen Durchlass angeordnet sind, und wobei die Brechplatte (26), die mit jedem sich drehenden Rotor (24) verbunden ist, auf zueinander versetzte Weise zwischen den benachbarten sich drehenden Rotoren (24) angeordnet ist.

## Revendications

1. Appareillage (100) pour la fabrication d'une briquette de charbon, comprenant :
un mélangeur (110) qui mélange du charbon pulvérisé et un liant pour former un mélange ;
un dispositif de pré-moulage (10) relié au mélangeur (110), qui compresse et moule une première fois le mélange ;
un dispositif de moulage (120) relié au dispositif de pré-moulage (10), qui compresse et moule une deuxième fois la matière compressée et moulée par le dispositif de pré-moulage (10) pour fabriquer avec une briquette de charbon,
**caractérisé en ce qu'**il comprend en outre un concasseur (20) installé entre le dispositif de pré-moulage (10) et le dispositif de moulage (120), qui concasse la matière à mouler moulée par le dispositif de pré-moulage (10).

2. Appareillage (100) selon la revendication 1, lequel appareillage comprend en outre au moins un malaxeur (140) relié au côté de sortie du mélangeur (110) et qui malaxe le mélange et une vis d'alimentation (150) qui transfère le mélange sortant du malaxeur (140) vers le dispositif de pré-moulage (10).

3. Appareillage (100) selon la revendication 1, dans lequel le dispositif de pré-moulage (10) comprend une paire de rouleaux presseurs (14) installés dans un caisson (12) qui compressent le mélange, ainsi qu'un moteur d'entraînement (16) relié à un axe de rotation du rouleau presseur (14), qui fait tourner et entraîne le rouleau presseur (14).

4. Appareillage (100) selon la revendication 3, dans lequel les deux rouleaux presseurs (14) de la paire sont disposés en ménageant un intervalle entre eux et possèdent une structure telle qu'une partie faite de saillies ou de creux est formée sur leur surface de circonférence externe.

5. Appareillage (100) selon la revendication 1, dans lequel le concasseur (20) comprend un rotor en rotation (24) installé dans un passage vertical (22) relié au côté de sortie du caisson du dispositif de pré-moulage (10) pour être entraîné en rotation et muni d'une plaque de concassage (26) dans la direction d'un axe et à distance, et un moteur d'entraînement (28) qui fait tourner le rotor en rotation (24).

6. Appareillage (100) selon la revendication 5, dans lequel au moins deux rotors en rotation (24) sont disposés parallèlement dans le passage vertical et la plaque de concassage (26) reliée à chaque rotor en rotation (24) est disposée de façon à être décalée par rapport à celles des rotors en rotation (24) voisins.
